# EUROPEAN PATENT APPLICATION

(11) **EP 3 216 592 A1**
(43) Date of publication of application: **13.09.2017**
(21) Application number: 16002301.6
(22) Date of filing: 28.10.2016
(51) Int. Cl.: B29D 11/00, B81B 7/00, H01L 27/146

(54) **A FABRICATION METHOD OF OPTICAL SENSOR COVER HAVING A LENS**

(30) Priority: 08.03.2016 SG 2016050107
(71) Applicant: TNC Optics & Technologies Pte. Ltd., Singapore 408705 (SG)
(72) Inventor: Wee, Ang Chee, 530407 Singapore (SG); Thiem, Ronald Koh Eng, 534041 Singapore (SG)
(74) Representative: Delaveau, Sophie

(57) **Abstract**

A method of fabricating an optical sensor cover with lens is disclosed. The method comprises the steps of preparing a lens mold Insert (22) having a cavity (30) with a profile identical to a sensor cover (20) with a lid having an opening, inserting the sensor cover (20) into the cavity (30) on the lens mold insert (22), injecting a molten material Into the lid of the sensor cover (20) so that the molten material fills up the lid opening, ejecting of a moulded cover with lens from the lens mold insert (22) and obtaining a cover having a lens molded InSitu.

## Description

### TECHNICAL ART

The present invention relates to an optical sensor cover, and in particular to a cover with a lens, and a producing method therefor.

### BACKGROUND OF THE INVENTION

It has been known to produce a lens such as a plastic lens by Injection-molding of a resin material. In this way of production, required are a set of molding dies made of metal or ceramic with the required profile arranged between the dies to form a molding space therebetween. The one surface of respective lens molding die is formed to have a predetermined shape corresponding to that of the respective surface of a lens to be produced. A through-hole for injecting a resin material Into the molding space is formed on the die.

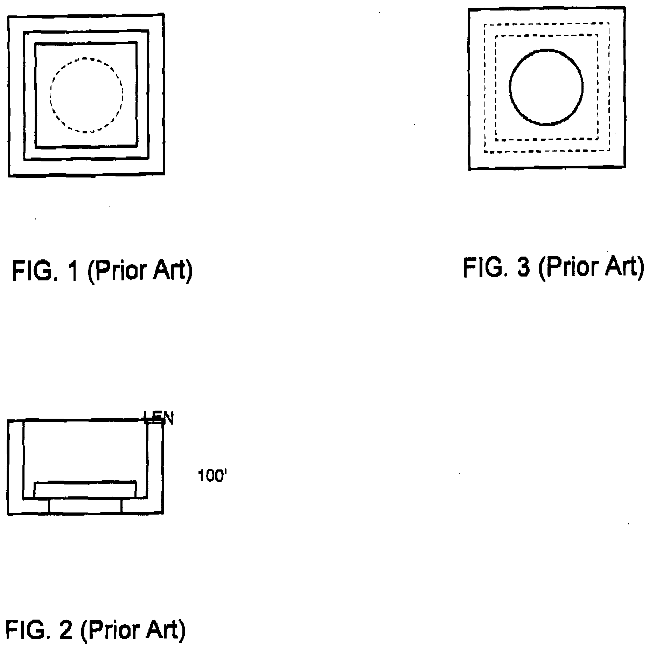

FIGs.1, 2-3 indicate optical sensor cover obtained using conventional method, As shown In the figures, the cover Is denoted by reference number 100' and lens is mounted to the optical sensor cover 100'.

In the lens fabricating process with the above explained items, a pair of lens molding dies are disposed with the lens forming surfaces thereof opposing to each other and securely contacted, by means of clamping or the like, with placing a spacer therebetween to form a closed space corresponding to the shape of a lens to be produced.

Then, lens material is Injected into the closed space through the though-hole of the spacer, and energy is applied to the lens material in the closed space externally, by means of heat or the like, to solidify it, Thereafter, the solidified material, i.e., the produced lens is taken out of the molding dies by disassembling them. The molding dies and the spacer are repeated In sub sequent sequence.

In accordance with the above explained conventional method for producing a lens, a pair of lens molding dies are occupied for producing one lens until the lens material therein is hardened, so the process is repeated to carry out a mass-production with the above method. It costs much to produce a molding die of metal or ceramic having a molding surface of a precise shape.

Light sensing module commonly consists of a PCB substrate with a cover. For the cover, the existing production method Is by molding a lid using high temperature resin, and with opening for the lens, After that a coated glass lens (that is first lapped to the required thickness, then diced to the required size) is then bonded to the lid using a bonding media. The existing process is both laborious and challenging due to the small footprint of the lens and the cover. The bonding process Is also challenging as need to ensure just right amount of glue, and right position so glue do not smudge the glass lens, nor have voids.

US Patent Application No. 20060131768 discloses a method for producing a lens molding die, comprising; preparing a base member made of a hard material and having one surface of a predetermined shape; and forming a resin-made surface layer on said one surface of the base member to have a surface shape corresponding to a predetermined shape of one surface of a lens to be produced.

### SUMMARY OF THE INVENTION

It Is a main object of the present invention to provide a method of fabricating an optical sensor cover with lens, comprising the steps of: (1) preparing a lens mold insert (22) having a cavity (30) with a profile Identical to a sensor cover (20) with a lid having an opening; (ii) inserting the sensor cover (20) into the cavity (30) on the lens mold insert (22); (iii) injecting a molten material into the lid of the sensor cover (20) so that the molten material fills up the lid opening; (iv) ejecting of a moulded cover with lens from the lens mold insert (22); and (v) obtaining a cover having a lens molded InSitu.

It Is therefore an object of the present invention to provide an improved lens molding capable of being produced at relatively lower cost and in relatively short time to fabricate optical sensor cover with lens.

For the above purpose, in accordance with the present invention, there is provided a manufacturing of the cover with lens, which solves the packaging problem in optical sensor.

Another object of the present invention is to provide a method of manufacturing optical sensor cover which resolves the complexity of micro components assembly of lens and cover for optical sensor.

It is an object of the present Invention to provide a fabrication method of optical sensor cover with a lens, which is easy in processing, and the assembly for the processing Is simplified, which allows automation In fabrication.

Yet still another object of the present invention is to provide a fabrication method of optical sensor cover with a lens, which allows matrix handling and the quality of the product is consistent and reproducibility.

A further object of the present invention Is to provide a method of manufacturing of an optical sensor cover with lens, wherein precision mold tool designs and matching resin are used to provide a product that eliminates lid and lens assembly.

### BRIEF DESCRIPTION OF THE DRAWINGS

FIGs. 1-3 Indicate optical sensor cover obtained using conventional method.
FIGs. 4 and 5 show sectional view and top view respectively lens molding for the fabrication of optical sensor cover with lens in accordance with the present invention.
FIG, 6A is a perspective view showing the optical sensor cover with a cavity in accordance with the present invention.
FIG. 6B is a perspective view showing the optical sensor cover with injection of molten plastic into the cavity of the optical sensor cover In accordance with the present invention.
FIG. 7A is a perspective view showing the mounting of optical sensor cover onto the lens mold Insert in accordance with the present invention.
FIG. 7B is a sectional view showing the mounting of optical sensor cover onto the lens mould insert in accordance with the present invention.
FIG. 8A is a perspective view showing the injection of a molten material into the lid of the optical sensor cover in accordance with the present invention.
FIG. 8B is a sectional view showing the injection of a molten material into the lid of the optical sensor cover In accordance with the present invention.
FIG. 9A Is a perspective view showing the optical sensor cover in accordance with the present invention.
FIG. 9B is a sectional view showing the molten material filled up the lid opening of the sensor cover in accordance with the present invention.
FIG. 9C is a top view showing the optical sensor cover In accordance with the present invention.
FIG. 9D is a bottom view showing the optical sensor cover in accordance with the present invention.

### DETAILED DESCRIPTION OF THE PRESENT INVENTION

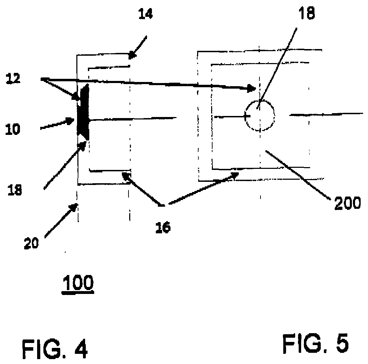

As shown in FIGs.4 & FIG. 5, there is shown a sensor cover with lens 100 embodying the invention comprising a side wall 14, 16 of a substantially a square-plate shape, and the center thereof is made a mold having a gate 12 and lens surface to top wall, wherein a lens 10 Is formed by molding process.

The material for forming the optical sensor cover 100 Is plastics. Other materials, such as thermoset epoxy material, etc are also suitable material for forming the optical sensor cover 100. In the present invention, the sidewall 14, 16 of the lens sensor cover 100 is either glass ceramic, substrate or plastics material. The molded lens 10 of the optical sensor cover 100 is formed by hardening the resin material to form a lens on the molding surface as later described.

In accordance with a preferred embodiment of the present invention, the lens moulding 100 is provided with a gate design 12, and the side wall 14, 16 is made of an opaque resin. The lens resin allows for suitable wavelength to pass through, and these wavelengths are ranging UV, to NIR, to FIR. The resin is optically clear resin for the lens, and an opaque resin is used for the sidewall (or the housing).

The optical sensor cover is offered with, or without EMI precoated on the underside so as to add EMI/ESD properties thereto as needed, In this embodiment, the coating of the cover 100 is conductive and can be soldered with conductive epoxy. The molding polymer lens In the present invention is high heat resin which can be formulated to have different transmittance properties added.

In accordance with the present invention, the opaque resin can also be a conductive fillers compound. Depending on IR needs, the moulded sidewall can withstand the standard solder reflow of 260 deg. C or, a lowered solder reflow temperature of 200 deg. C.

Each unit of the cover100 comprises a single lens, or multiple lens moulded insitu. The multiple lens can be in the same chamber or in different chamber, and the cover can be singularly moulded or as Matrix arrays, In accordance with the present invention, the matrix design, the overall wall thickness is twice the wall thickness plus saw blade width. This allows for the sawing of width to form 2 side by side units wall.

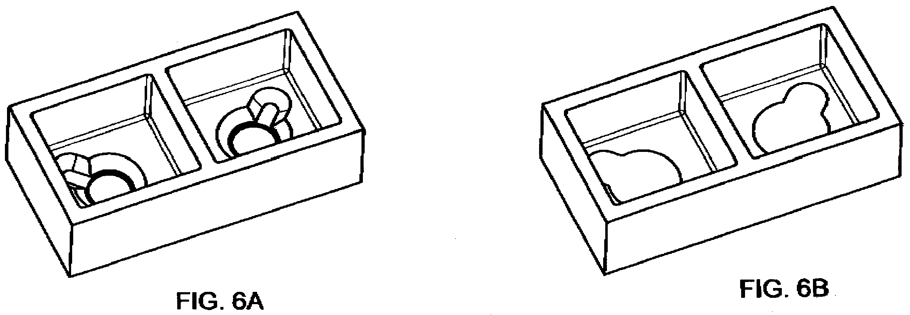

In the preferred embodiment, the material for the molded sidewall is to be selected from the materials which are inactive with the lens material, so that the molded sidewall can keep their shapes even during curing treatments without being reacted with the lens molding material. FIG. 6A is a perspective view showing the optical sensor cover 100 with a cavity in accordance with the present invention and FIG. 6B is a perspective view showing the optical sensor cover with Injection of molten plastic Into the cavity of the optical sensor cover In accordance with the present invention.

As shown in the figures, a cavity is formed on the optical sensor cover 100 for the insertion of a molten material. The molten material such as an epoxy resin is injected Into the cavity and fills the cavity.

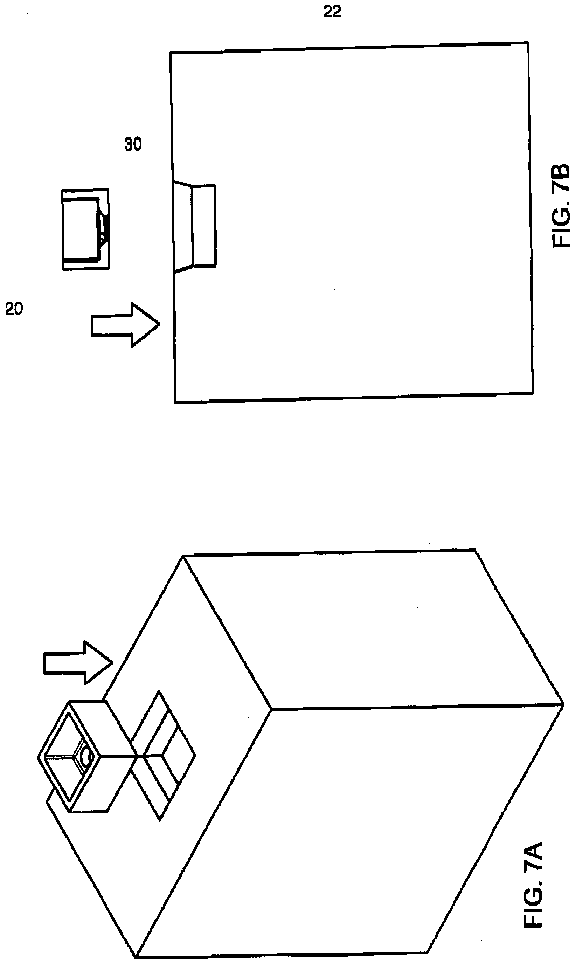

FIG. 7A is a perspective view showing the mounting of optical sensor cover onto the lens mold insert In accordance with the present invention and FIG. 7B Is a sectional view showing the mounting of optical sensor cover onto the lens mould insert in accordance with the present invention. The optical sensor cover 100 is inserted into the lens molding insert 22. The profile of the optical sensor cover 100 is identical to the cavity formed on the lens mould insert 22.

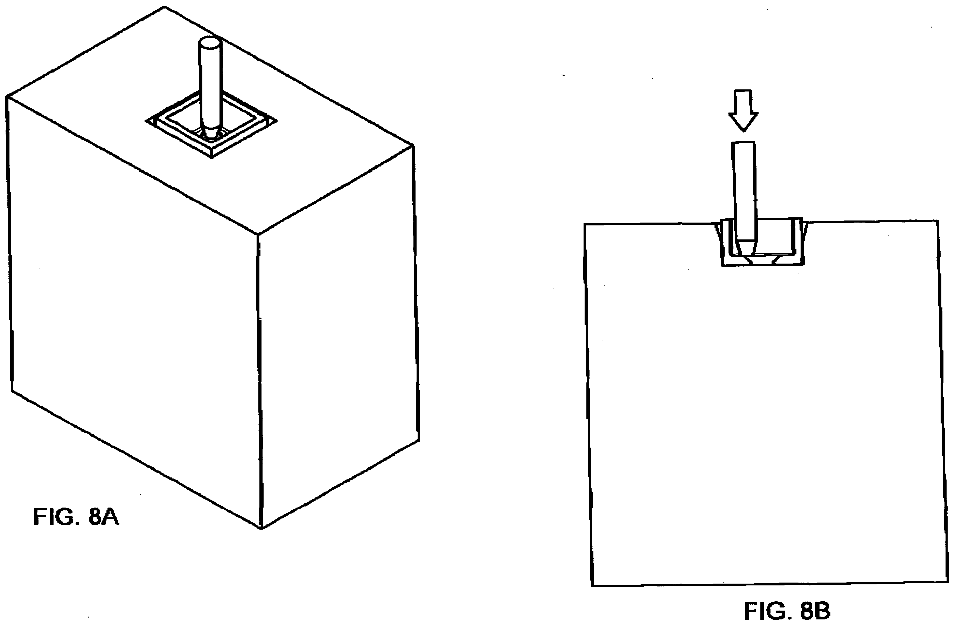

FIG. 8A is a perspective view showing the injection of a molten material into the lid of the optical sensor cover in accordance with the present invention, and FIG. 8B Is a sectional view showing the Injection of a molten material into the lid of the optical sensor cover. The molten material Is inserted into the lid of the optical sensor cover 100.

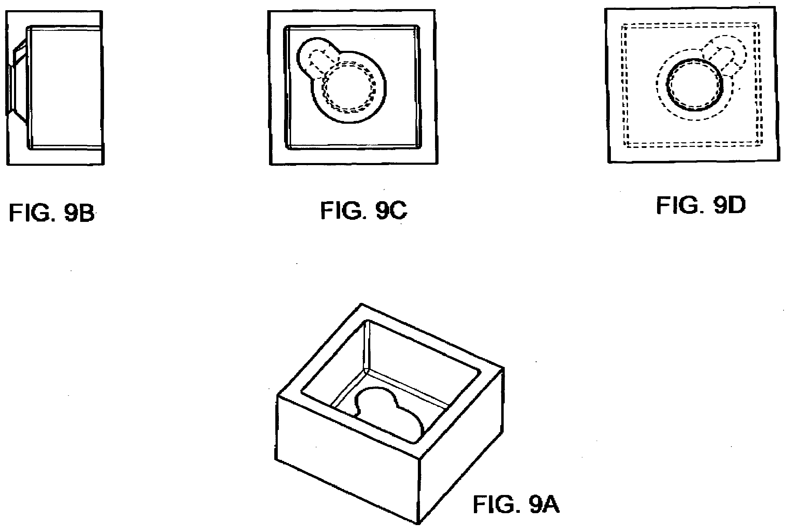

FIG. 9A is a perspective view showing the optical sensor cover in accordance with the present invention and FIG. 9B Is a sectional view showing the molten material filled up the lid opening of the sensor cover in accordance with the present invention. FIG. 9C is a top view showing the optical sensor cover in accordance with the present invention, and FIG. 9D is a bottom view showing the optical sensor cover in accordance with the present invention. The molten material fills up the cavity provided on the optical sensor cover with lens and a moulded cover with lens Is thus obtained.

In the preferred embodiment of the present invention, the optical sensor cover 100 is first moulded on a first set of mould die according to the required profile with provision in the design for gating for the lens moulding. The optical sensor cover 100 is presented to and positioned on the lens mould insert 22 as shown in FIGs 7A, 7B, 8A, 8B, and both half of the molding die will closed, followed by molten resin been injected into the closed die. After the mould cycle is completed, both half of die will opened, and the moulded cover 100 with the lens is ejected from the die, and the cover now has a lens moulded InSitu.

In other words, the method of preparing an optical sensor cover with lens comprising the steps of
(i) preparing a lens mold insert (22) having a cavity (30) with a profile identical to a sensor cover (20) with a lid having an opening;
(ii) Inserting the sensor cover (20) into the cavity (30) on the lens mold Insert (22);
(iii) Injecting a molten material into the lid of the sensor cover (20) so that the molten material fills up the lid opening;
(iv) ejecting of a moulded cover with lens from the lens mold insert (22); and
(v) obtaining a cover having a lens molded InSitu.

The in-situ moulded lens can be a simple piano surface, or any other more complex optical profile to enhance the lens optical properties and performance.

In accordance with the present invention, a matrix array of individual optical sensor with cover with lens (100) is obtained. The matrix layout can be an independent layout, but can also be designed for matching layout to a printed circuit board (PCB).

The foregoing description of the specific embodiments will show fully the general nature of the invention so that others can, by apply current knowledge, readily modify and/or adapt for various applications such specific embodiments without departing from the generic concept, and, therefore, such adaptations and modifications should and are intended to be apprehended within the meaning and range of equivalents of the disclosed embodiments. It is to be understood within the phraseology or terminology implicit herein are for the purpose of description and not of limitation,

## Claims

1. A method of fabricating an optical sensor cover with lens (100), comprising the steps of:
(i) preparing a lens mold insert (22) having a cavity (30) with a profile identical to a sensor cover (20) with a lid having an opening;
(ii) inserting the sensor cover (20) into the cavity (30) on the lens mold insert (22);
(iii) injecting a molten material into the lid of the sensor cover (20) so that the molten material fills up the lid opening;
(iv) ejecting of a moulded cover with lens from the lens mold insert (22); and
(v) obtaining a cover having a lens molded InSitu.

2. The method of fabricating an optical sensor cover with lens as set forth in Claim 1, wherein the molten material is resin.

3. The method of fabricating an optical sensor cover with lens as set forth in Claim 1, wherein the molten material is a thermoset epoxy.

4. The method of fabricating an optical sensor cover with lens as set forth in Claim 1, wherein the temperature of the lens mold insert is made from a material selected from the group consisting of a metal, glass ceramic and plastic material.

5. The method of fabricating an optical sensor cover with lens as set forth in Claim 1, the optical sensor cover is with or without EMI precoated on the underside thereof so as to add EMI/ESD properties thereto.

6. A lens molding assembly comprising a Optical Sensor cover, with insitu lens in claim 1.

7. The lens molding assembly according to claim 6, wherein the lens cover is made of a thermosetting resin material.

8. The lens molding assembly according to claim 6, wherein the lens is made of an NIR, FIR resin material.

9. The method of fabricating an optical sensor cover with lens of Claim 1, further comprising the step of: posting thin film coating to the moulded lens after a mould lens is obtained.

10. The method of fabricating an optical sensor cover with lens of Claim 1, further comprising the step of: providing specific cut off transmittance after the post thin film coating has been conducted.

11. The method of fabricating an optical sensor cover with lens of Claim 1, wherein a matrix array of individual optical sensor with cover with lens Is obtained.

12. The method of fabricating an optical sensor cover with lens of Claim 11, wherein the matrix layout Is an independent layout.

13. The method of fabricating an optical sensor cover with lens of Claim 12, wherein the matrix layout is designed for matching layout to a printed circuit board.
